# EUROPEAN PATENT APPLICATION

(11) **EP 1 582 773 A2**
(43) Date of publication of application: **05.10.2005**
(21) Application number: 05005129.1
(22) Date of filing: 09.03.2005
(51) Int. Cl.: F16H 55/56

(54) **Pulley structure**

(30) Priority: 31.03.2004 JP 2004105769
(71) Applicant: JATCO Ltd, Shizuoka 417-8585 (JP)
(72) Inventor: Kuroda, Shojiro, Fuji-shi Shizuoka 417-8585 (JP)
(74) Representative: Grünecker, Kinkeldey, Stockmair & Schwanhäusser Anwaltssozietät

(57) **Abstract**

A spline (3) is fit on a rotary shaft (1) at a position bounding a first diameter (D1) passing through an axis of the rotary shaft (1), located between a backside inner circumferential surface of a movable pulley disk (4) and a first outer circumferential surface (1a) of the rotary shaft (1), and arranged to restrict rotation of the movable pulley disk (4). A hydraulic fluid chamber (5) for driving the movable pulley disk (4) is formed at a backside position of the movable pulley disk (4). A seal portion (6) for the hydraulic fluid chamber (5) is fit over the rotary shaft (1) at a position bounding a second diameter (D2) passing through the axis of the rotary shaft (1), located at a gap between a sheave-side inner circumferential surface of the movable pulley disk (4) and a second outer circumferential surface (1b) of the rotary shaft confronting the sheave-side inner circumferential surface. The second diameter (D2) is set equal to the first diameter (D1).

## Description

### BACKGROUND OF THE INVENTION

The present invention relates to a pulley structure or assembly for a V-belt continuously-variable transmission mechanism as in a vehicle and other devices.

A V-belt continuously-variable transmission mechanism requires a pulley structure in which an endless V-belt is wound with a variable effective radius, as disclosed in Japanese Patent Application Publication No. H11(1999)-13845 or Japanese Patent No. 3306217.

### SUMMARY OF THE INVENTION

It is an object of the present invention to provide a pulley structure or assembly capable of downsizing, and reducing and uniformizing an amount of leakage of working fluid via a seal portion to decrease a supply of working fluid and improve controllability of a transmission shift operation.

According to one aspect of the present invention, a pulley assembly includes: a rotary shaft; a fixed pulley disk provided fixedly on an outer circumference of the rotary shaft, and including a first sheave surface forming a pulley groove; a movable pulley disk fit over the outer circumference of the rotary shaft slidably in an axial direction of the rotary shaft, and including a second sheave surface confronting the first sheave surface of the fixed pulley disk to define the pulley groove between the first sheave surface and the second sheave surface; a spline fit on the rotary shaft at a position bounding a first diameter passing through an axis of the rotary shaft, located between a backside inner circumferential surface of the movable pulley disk and a first outer circumferential surface of the rotary shaft, and arranged to restrict rotation of the movable pulley disk; an outer circumferential member fixed on a backside of the movable pulley disk; a wall member arranged to form a hydraulic fluid chamber between the outer circumferential member and the wall member, the hydraulic fluid chamber being arranged to drive the movable pulley disk; and a seal portion fit over the rotary shaft at a position bounding a second diameter passing through the axis of the rotary shaft and being equal to the first diameter in length, located at a gap between a sheave-side inner circumferential surface of the movable pulley disk and a second outer circumferential surface of the rotary shaft confronting the sheave-side inner circumferential surface of the movable pulley disk, and arranged to seal the hydraulic fluid chamber.

The other objects and features of this invention will become understood from the following description with reference to the accompanying drawings.

### BRIEF DESCRIPTION OF THE DRAWINGS

FIGS. 1A and 1B are sectional views each showing a pulley structure according to an embodiment of the present invention.

FIGS. 2A and 2B are sectional views each showing a pulley structure of earlier technology.

### DETAILED DESCRIPTION OF THE INVENTION

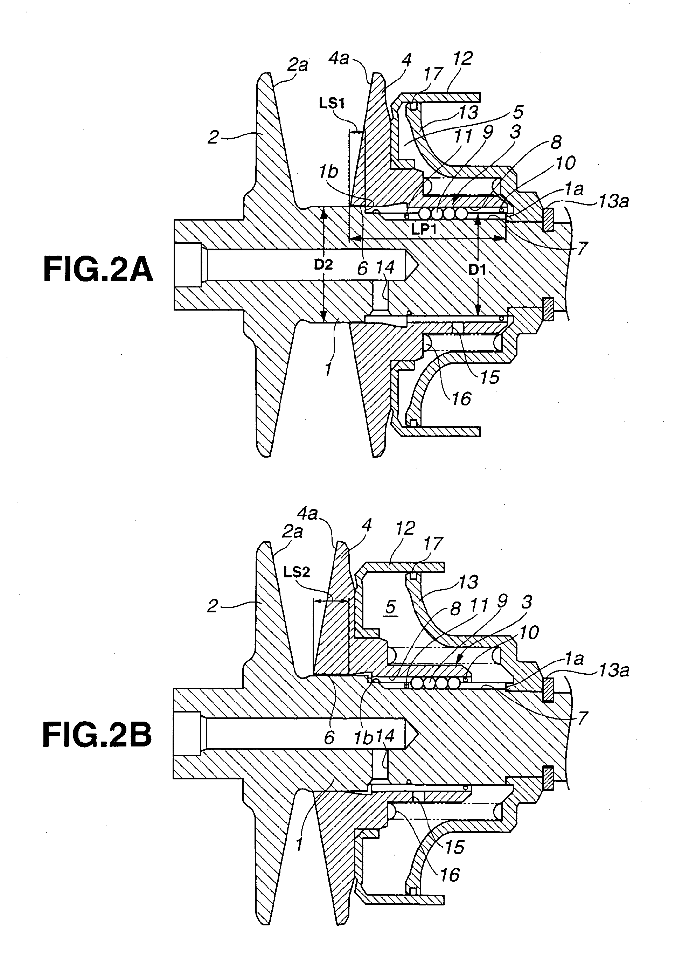

First, in order to facilitate understanding of the present invention, a description will be given of a pulley structure of earlier technology for a V-belt continuously-variable transmission mechanism in which an endless V-belt is wound with a variable effective radius. FIGS. 2A and 2B are sectional views each showing such a pulley structure of earlier technology, as disclosed in Japanese Patent Application Publication No. H11(1999)-13845. The pulley structure includes a rotary shaft 1, a fixed pulley portion or disk 2, splines 3, a movable pulley portion or disk 4, a cylinder outer circumferential member 12 and a cylinder wall member 13 arranged to define a working fluid or hydraulic fluid chamber 5, and a seal portion 6 for the hydraulic fluid chamber 5. The fixed pulley portion 2 is provided fixedly (unitarily in FIGS. 2A and 2B) on an outer circumference of the rotary shaft 1 at a position in one direction (left in FIGS. 2A and 2B) of the rotary shaft 1, and includes a (first) sheave surface 2a forming a pulley groove. The movable pulley portion 4 is fit over the outer circumference of the rotary shaft 1 at a position in opposite direction (right in FIGS. 2A and 2B), and includes a (second) sheave surface 4a confronting the sheave surface 2a of the fixed pulley portion 2 to define the pulley groove between the sheave surface 2a and the sheave surface 4a. The movable pulley portion 4 is coupled with the rotary shaft 1 by using the splines 3. In this example, the splines 3 are splines such as ball splines or roller splines each including rolling members 9. The rolling members 9 are members such as ball-shaped or cylindrical members. The splines 3 restrict rotation of the movable pulley portion 4 with respect to the rotary shaft 1 and allow the movable pulley portion 4 to slide in an axial direction of the rotary shaft 1. The hydraulic fluid chamber 5 is formed at a backside (right in FIGS. 2A and 2B) of the movable pulley portion 4 and is arranged to drive the movable pulley portion 4. The seal portion 6 is provided at a small gap between a sheave-side inner circumferential surface (located left in FIGS. 2A and 2B) of the movable pulley portion 4 and an outer circumferential surface (or second outer circumferential surface) of the rotary shaft 1 confronting the sheave-side inner circumferential surface of the movable pulley portion 4. The seal portion 6 is arranged to seal the hydraulic fluid chamber 5.

The splines 3 are fit over the rotary shaft 1 at a position bounding a first or fit-over diameter D1. The seal portion 6 is fit over the rotary shaft 1 at a position bounding a second or fit-over diameter D2. The fit-over diameter D1 and the fit-over diameter D2 are not equal to each other in length (D2>D1), as described hereinbelow. The rotary shaft 1 includes a first step portion 1a and a second step portion 1b. The first step portion 1a and the second step portion 1b are formed on the outer circumference of the rotary shaft 1 at both sides (or first and second sides) of each of the splines 3. The first step portion 1a is used mainly for cutting out a shaft-side groove 7 and loading the rolling members 9. The second step portion 1b is used for realizing the different diameters D1 and D2.

In this example, the splines 3 are provided at three positions in a circumferential direction of the rotary shaft 1. Each of the splines 3 includes the shaft-side groove 7, a boss-side groove 8, the rolling members 9, and snap rings 10 and 11. The shaft-side groove 7 is formed at the outer circumference (or first outer circumferential surface) of the rotary shaft 1. The boss-side groove 8 is formed at the inner circumference (or backside inner circumferential surface) of the movable pulley portion 4. The rolling members 9 such as ball-shaped or cylindrical members are loaded into a strip-shaped space formed by the shaft-side groove 7 and the boss-side groove 8 and extending in the axial direction of the rotary shaft 1. The snap rings 10 and 11 are mounted on the backside inner circumferential surface (located right in FIGS. 2A and 2B) of the movable pulley portion 4 and on a predetermined position (at a left end of the shaft-side groove 7) on the rotary shaft 1 to prevent falling of the rolling members 9.

The cylinder outer circumferential member 12 has a cylindrical form, and is fixed on the backside of the movable pulley portion 4. The cylinder wall member 13 is provided slidably inside the cylinder outer circumferential member 12. The cylinder wall member 13 includes an inner circumferential portion mounted on the rotary shaft 1. The inner circumferential portion of the cylinder wall member 13 is flanked by the first step portion 1a of the rotary shaft 1 and a snap ring 13a mounted on a position nearer to an end in the opposite direction (right in FIGS. 2A and 2B) of the rotary shaft 1 from the first step portion 1a. The hydraulic fluid chamber 5 is formed as a space defined at least by the cylinder outer circumferential member 12, the cylinder wall member 13 and the outer circumference of the rotary shaft 1. The rotary shaft 1 is formed with a passage 14 extending in a radial direction of the rotary shaft 1. The movable pulley portion 4 is formed with a passage 15 extending in the radial direction. The hydraulic fluid chamber 5 is supplied with working fluid (normally, in the form of oil) via the passage 14 and the passage. The pulley structure also includes a spring 16 (a compression coil spring in this example) and a seal member 17. The spring 16 is provided between the movable pulley portion 4 and the cylinder wall member 13 in the hydraulic fluid chamber 5. The spring 16 urges or biases the movable pulley portion 4 in a direction (left in FIGS. 2A and 2B) toward the fixed pulley portion 2. The seal member 17 is attached to an outer circumferential portion of the cylinder wall member 13, and seals a part between (sliding surfaces of) the outer circumferential portion of the cylinder wall member 13 and an inner circumferential surface of the cylinder outer circumferential member 12.

When the hydraulic fluid chamber 5 is supplied with the working fluid, and a total of a pressure of the working fluid and a bias force of the spring 16 surpasses a reaction force from the endless V-belt and so forth, the movable pulley portion 4 is pressed toward the fixed pulley portion 2 (left in FIGS. 2A and 2B). This narrows an interval between the sheave surfaces (inclined surfaces) 4a and 2a of the movable pulley portion 4 and the fixed pulley portion 2, and thereby enlarges the effective radius of the endless V-belt wound around the pulley groove formed between the sheave surfaces 4a and 2a at one of an input side and an output side and a pulley groove formed at the other of the input side and the output side. Conversely, when a total of a pressure of the working fluid and so forth becomes smaller than the reaction force from the endless V-belt and so forth, the movable pulley portion 4 is pressed in opposite direction (right in FIGS. 2A and 2B). This widens the interval between the sheave surfaces 4a and 2a of the movable pulley portion 4 and the fixed pulley portion 2, and thereby decreases the effective radius of the endless V-belt wound around the pulley grooves. Thus, a continuously-variable transmission is enabled by the above-described pulley structure provided at the input side and the output side. In FIG. 2A, the movable pulley portion 4 is positioned at a stroke end in an opening direction (at which the interval between the pulley portions becomes maximum, and the belt effective radius becomes minimum). In FIG. 2B, the movable pulley portion 4 is positioned at a stroke end in a closing direction (at which the interval between the pulley portions becomes minimum, and the belt effective radius becomes maximum).

The boss-side groove 8 of the movable pulley portion 4 is formed by a broaching work in which the backside inner circumferential surface of the movable pulley portion 4 is penetrated by a tool formed with an external cutting blade to form a groove in the backside inner circumferential surface. Therefore, to avoid the blade of the tool, the sheave-side inner circumferential surface of the movable pulley portion 4 forming the seal portion 6 needs to have a larger diameter. For this reason, the second step portion 1b is formed to set the fit-over diameter D2 to be substantially larger than the fit-over diameter D1.

However, the above-described pulley structure of earlier technology requires that the rotary shaft 1 have a relatively long axial length because of the presence of the second step portion 1b. This requirement puts an obstacle in downsizing the structure. Besides, the second step portion 1b has a function of providing a clearance to prevent a backside inner circumferential portion of the movable pulley portion 4 (at which the spline 3 is provided) at the fit-over diameter D1 from abutting on (interfering with) the outer circumferential surface of the rotary shaft 1 forming the seal portion 6, until the movable pulley portion 4 reaches the stroke end in the closing direction (as shown in FIG. 2B) at which the movable pulley portion 4 comes closest to the fixed pulley portion 2. Therefore, the second step portion 1b needs to be positioned substantially nearer to an end in the one direction (left in FIGS. 2A and 2B) of the rotary shaft 1 from the left end of the shaft-side groove 7. Thus, the rotary shaft 1 is required to have a considerably long axial length.

Besides, because of the presence of the second step portion 1b, the above-described pulley structure of earlier technology cannot adequately secure a minimum length LS1 (shown in FIG. 2A) of the seal portion 6. Thus, the above-described pulley structure of earlier technology involves a large amount of leakage of the working fluid via the seal portion 6, and thus necessitates a considerably large supply of the working fluid to the hydraulic fluid chamber 5 at the stroke end in the opening direction. Also, because of the presence of the second step portion 1b, the above-described pulley structure of earlier technology involves a considerably large difference between a maximum length LS2 (shown in FIG. 2B) of the seal portion 6 and the minimum length LS1. Thus, the above-described pulley structure of earlier technology involves large variations of leakage of the working fluid via the seal portion 6 which depend on the position of the movable pulley portion 4. Practically, such large variations of leakage of the working fluid causes difficulty in pressure control of the hydraulic fluid chamber 5, and consequently decreases controllability of a transmission shift operation, and also causes difficulty in optimization of belt transmission efficiency which affects fuel economy of a vehicle.

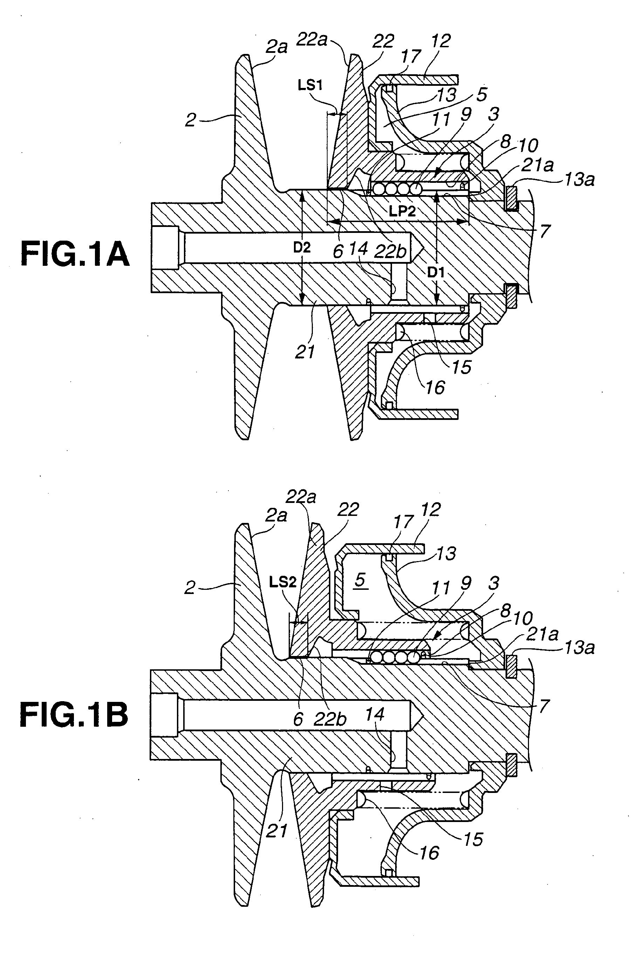

FIGS. 1A and 1B are sectional views each showing a pulley structure or assembly according to an embodiment of the present invention. The pulley structure of FIGS. 1A and 1B is based on the pulley structure of FIGS. 2A and 2B. Thus, elements in FIGS. 1A and 1B that are identical or equivalent to the elements shown in FIGS. 2A and 2B are indicated by the same reference marks, and will not be described in detail in this part of description. A continuously-variable transmission adopting the pulley structure of this embodiment has a configuration of earlier technology except for the pulley structure of FIGS. 1A and 1B, and will not be described in detail in this part of description.

The pulley structure of this embodiment includes a rotary shaft 21 and a movable pulley portion or disk 22. The fit-over diameter D1 and the fit-over diameter D2 are set equal to each other in length (D1=D2) for the rotary shaft 21 and the movable pulley portion 22. Therefore, the rotary shaft 21 includes only a first step portion 21a corresponding to the first step portion 1a, but does not include a step portion (clearance) corresponding to the second step portion 1b of FIGS. 2A and 2B. That is, the pulley structure of FIGS. 1A and 1B realizes the equal diameters D1 and D2 by setting target sizes and precision (or permissible error) in forming the following portions to provide inside/outside diameters as follows, in addition to conditions for fulfilling functions of the seal portion 6 and the splines 3. Specifically: a backside inner circumferential surface of the movable pulley portion 22 at which the spline 3 is provided has an inside diameter slightly larger than an outside diameter of a second outer circumferential surface of the rotary shaft 21 forming the seal portion 6; and a sheave-side inner circumferential surface of the movable pulley portion 22 forming the seal portion 6 has an inside diameter slightly larger than an outside diameter of a first outer circumferential surface of the rotary shaft 21 at which the spline 3 is provided. Thus, the fit-over diameter D1 and the fit-over diameter D2 of FIGS. 1A and 1B are set substantially equal to each other in length, and the rotary shaft 21 does not include the second step portion. In the structure without the second step portion, the movable pulley portion 22 has an axial length LP2 shorter than an axial length LP1 of the movable pulley portion 4 of FIG. 2A. The axial length LP2 is a distance measurement from an inner circumferential position of a (second) sheave surface 22a of the movable pulley portion 22 positioned at a stroke end in an opening direction as shown in FIG. 1A, to the first step portion 21a. The axial length LP1 is a distance measurement from an inner circumferential position of the sheave surface 4a of the movable pulley portion 4 positioned at the stroke end in the opening direction as shown in FIG. 2A, to the first step portion 1a.

If the inside diameter of the backside inner circumferential surface of the movable pulley portion 22 (at which the spline 3 is provided) is smaller than the outside diameter of the second outer circumferential surface of the rotary shaft 21 (forming the seal portion 6), the rotary shaft 21 is required to include a clearance such as the second step portion 1b of FIGS. 2A and 2B to prevent the backside inner circumferential surface of the movable pulley portion 22 from interfering with the second outer circumferential surface of the rotary shaft 21 when the movable pulley portion 22 moves toward a stroke end in a closing direction. If the inside diameter of the sheave-side inner circumferential surface of the movable pulley portion 22 (forming the seal portion 6) is smaller than the outside diameter of the first outer circumferential surface of the rotary shaft 21 (at which the spline 3 is provided), the pulley structure cannot enable an assembly operation of fitting the movable pulley portion 22 with respect to the fixed pulley portion 2.

The movable pulley portion 22 includes a recession or receding portion 22b formed in proximity of a middle portion of the inner circumference of the movable pulley portion 22, i.e., between the sheave-side inner circumferential surface of the movable pulley portion 22 forming the seal portion 6 and the backside inner circumferential surface of the movable pulley portion 22 at which the spline 3 is provided. The recession 22b has an inside diameter or internal sectional size prominently larger than the fit-over diameter D1/D2. The recession 22b brings the difference between the maximum length LS2 (shown in FIG. 1B) of the seal portion 6 and the minimum length LS1 (shown in FIG. 1A) of the seal portion 6 to zero or a value close to zero. Besides, all or part of space in the axial direction obtained by the absence of the step portion corresponding to the second step portion 1b may be used to make the minimum length LS1 of FIG. 1A longer than the minimum length LS1 of FIG. 2A (FIG. 1A illustrates the minimum length LS1 of FIG. 1A slightly longer than the minimum length LS1 of FIG. 2A).

Whereas the boss-side groove 8 of the movable pulley portion 4 is formed by the broaching work, the boss-side groove 8 of the movable pulley portion 22 may be formed by an ordinary cutting work (such as by using a milling cutter, a gear shaper or a slotter).

When the hydraulic fluid chamber 5 is supplied with the working fluid, and a total of a pressure of the working fluid and so forth surpasses a reaction force from the endless V-belt and so forth, the movable pulley portion 22 is pressed toward the fixed pulley portion 2 (left in FIGS. 1A and 1B). This narrows an interval between the sheave surfaces (inclined surfaces) 22a and 2a of the movable pulley portion 22 and the fixed pulley portion 2, and thereby enlarges the effective radius of the endless V-belt wound around a pulley groove formed between the sheave surfaces 22a and 2a at one of an input side and an output side and a pulley groove formed at the other of the input side and the output side. Conversely, when a total of the pressure of the working fluid and so forth becomes smaller than the reaction force from the endless V-belt and so forth, the movable pulley portion 22 is pressed in opposite direction (right in FIGS. 1A and 1B). This widens the interval between the sheave surfaces 22a and 2a of the movable pulley portion 22 and the fixed pulley portion 2, and thereby decreases the effective radius of the endless V-belt wound around the pulley grooves. Thus, a continuously-variable transmission is enabled by the above-described pulley structure provided at the input side and the output side. In FIG. 1A, the movable pulley portion 22 is positioned at the stroke end in the opening direction. In FIG. 2B, the movable pulley portion 22 is positioned at the stroke end in the closing direction.

In the pulley structure of this embodiment, the fit-over diameter D1 and the fit-over diameter D2 are set equal to each other in length. This structure enables an assembly operation of fitting the movable pulley portion 22 with respect to the fixed pulley portion 2. This structure also allows the movable pulley portion 22 to move toward the stroke end in the closing direction while the backside inner circumferential surface of the movable pulley portion 22 (at which the spline 3 is provided) covers the outer circumferential surface of the rotary shaft 21 forming the seal portion 6 (as shown in FIG. 1B). Therefore, the pulley structure of this embodiment does not require a clearance such as the second step portion 1b of FIGS. 2A and 2B. The absence of the clearance corresponding to the second step portion 1b allows the movable pulley portion 22 and the rotary shaft 21 to be downsized or have shorter axial lengths, or creates a space in an axial direction of the rotary shaft 21.

Besides, the pulley structure of this embodiment can secure the minimum length LS1 of the seal portion 6 of FIG. 1A longer than the minimum length LS1 of FIG. 2A by using all or part of the obtained space. Also, the pulley structure of this embodiment can bring the difference between the maximum length LS2 (shown in FIG. 1B) of the seal portion 6 and the minimum length LS1 (shown in FIG. 1A) to zero or a value close to zero as by forming the recession 22b in the movable pulley portion 22 as shown in FIGS. 1A and 1B. Thus, the pulley structure of this embodiment can increase the length of the seal portion 6, and thereby can reduce an amount of leakage of the working fluid via the seal portion 6, and therefore can reduce a supply of the working fluid. Also, the pulley structure of this embodiment can uniformize the length of the seal portion 6, and thus can eliminate or reduce variations of leakage of the working fluid via the seal portion 6 depending on the position of the movable pulley portion, and therefore can improve controllability of a transmission shift operation.

The pulley structure of FIGS. 2A and 2B including the second step portion 1b may be able to uniformize the length of the seal portion 6 (or seal length) by forming a recession similar to the recession 22b in the inner circumference of the movable pulley portion 4. In this case, the seal length always equals the minimum length LS1 (or a value close to the minimum length LS1), and therefore requires that the minimum length LS1 be secured to a certain length (or that the seal length be maintained long enough to keep an amount of leakage of the working fluid less than or equal to an allowable amount). However, the pulley structure of FIGS. 2A and 2B does not afford enough space in the axial direction of the rotary shaft 1, and thus cannot fulfill such requirement. By contrast, the pulley structure of this embodiment creates the space in the axial direction of the rotary shaft 21, and thus can substantially fulfill such requirement.

Additionally, the pulley structure of this embodiment realizes the fit-over diameter D1 of FIG. 1A by expanding the fit-over diameter D1 of FIG. 2A to make the fit-over diameter D1 equal to the fit-over diameter D2. Thus, the splines 3 of FIG. 1A have an effective radius longer than an effective radius of the splines 3 of FIG. 2A. Therefore, the pulley structure of this embodiment can also improve a torque transmission capacity of the splines 3 (or can downsize the rolling members 9 such as ball-shaped or cylindrical members due to load reduction on the splines 3).

The present invention is applicable to variations as described hereinbelow.

The pulley structure of FIGS. 1A and 1B uses the space in the axial direction obtained by the absence of the second step portion 1b mainly for downsizing the structure in the axial direction or shortening the axial lengths of the movable pulley portion 22 and the rotary shaft 21. However, not limited to this embodiment, the pulley structure may use the obtained space to dispose other members, or to allow for size increase of other members in the axial direction.

The pulley structure may reduce the fit-over diameter D2 to make the fit-over diameter D2 equal to the fit-over diameter D1. In this variation, the pulley structure can expand the sheave surfaces 22a and 2a of the movable pulley portion 22 and the fixed pulley portion 2 toward the central axis of the rotary shaft 21.

The pulley structure of the present invention is applicable to either or both of pulleys (a primary pulley and a secondary pulley) at an input side and at an output side.

Further, the pulley structure of the present invention is applicable in a transmission mechanism not only for a vehicle but for other devices.

This application is based on a prior Japanese Patent Application No. 2004-105769 filed on March 31, 2004. The entire contents of this Japanese Patent Application No. 2004-105769 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A pulley assembly comprising:
a rotary shaft;
a fixed pulley disk provided fixedly on an outer circumference of the rotary shaft, and including a first sheave surface forming a pulley groove;
a movable pulley disk fit over the outer circumference of the rotary shaft slidably in an axial direction of the rotary shaft, and including a second sheave surface confronting the first sheave surface of the fixed pulley disk to define the pulley groove between the first sheave surface and the second sheave surface;
a spline fit on the rotary shaft at a position bounding a first diameter passing through an axis of the rotary shaft, located between a backside inner circumferential surface of the movable pulley disk and a first outer circumferential surface of the rotary shaft, and arranged to restrict rotation of the movable pulley disk;
an outer circumferential member fixed on a backside of the movable pulley disk;
a wall member arranged to form a hydraulic fluid chamber between the outer circumferential member and the wall member, the hydraulic fluid chamber being arranged to drive the movable pulley disk; and
a seal portion fit over the rotary shaft at a position bounding a second diameter passing through the axis of the rotary shaft and being equal to the first diameter in length, located at a gap between a sheave-side inner circumferential surface of the movable pulley disk and a second outer circumferential surface of the rotary shaft confronting the sheave-side inner circumferential surface of the movable pulley disk, and arranged to seal the hydraulic fluid chamber.

2. The pulley assembly as claimed in Claim 1, wherein the spline includes a rolling member loaded between the backside inner circumferential surface of the movable pulley disk and the first outer circumferential surface of the rotary shaft, and arranged to restrict rotation of the movable pulley disk with respect to the rotary shaft and to allow the movable pulley disk to slide in the axial direction of the rotary shaft.

3. The pulley assembly as claimed in Claim 2, wherein the rolling member is a ball-shaped member.

4. The pulley assembly as claimed in Claim 2, wherein the rolling member is a cylindrical member.

5. The pulley assembly as claimed in Claim 1, wherein an inside diameter of the backside inner circumferential surface of the movable pulley disk is larger than an outside diameter of the second outer circumferential surface of the rotary shaft; and an inside diameter of the sheave-side inner circumferential surface of the movable pulley disk is larger than an outside diameter of the first outer circumferential surface of the rotary shaft.

6. The pulley assembly as claimed in Claim 1, further comprising a spring member provided between the movable pulley disk and the wall member.

7. The pulley assembly as claimed in Claim 1, wherein the movable pulley disk is formed with a receding portion between the sheave-side inner circumferential surface and the backside inner circumferential surface, the receding portion having an inside diameter larger than each of the first diameter and the second diameter.
